Europäisches Patentamt

European Patent Office

Office européen des brevets

(11) Publication number: **0 440 788 A1**

# EUROPEAN PATENT APPLICATION
## published in accordance with Art. 158(3) EPC

(21) Application number: **90917788.3**

(22) Date of filing: **29.06.90**

(86) International application number:
**PCT/ES90/00023**

(87) International publication number:
**WO 91/00191 (10.01.91 91/02)**

(51) Int. Cl.5: **B60J 3/02**

(30) Priority: **05.07.89 ES 8902208 U**

(43) Date of publication of application:
**14.08.91 Bulletin 91/33**

(84) Designated Contracting States:
**AT BE DE FR GB IT NL SE**

(71) Applicant: **INDUSTRIAS TECHNO-MATIC, S.A.**
**Calle Espronceda 324**
**E-08027 Barcelona(ES)**

(72) Inventor: **GABAS CEBOLLERO, Carlos**
**Calle Rocafort, 180**
**E-08029 Barcelona(ES)**

(74) Representative: **Schwabe - Sandmair - Marx**
**Stuntzstrasse 16**
**W-8000 München 80(DE)**

(54) **HINGE FOR SUN VIZORS FOR MOTOR VEHICLES.**

(57) Hinge for sun vizors for motor vehicles, said hinge being comprised of a single piece body (1) wherein are configured the mechanical means for the firm and irreversible connection of said body (1) with the metal linkage (2) forming the framing of the sun vizor, and a housing (7) which receives alternating mechanical means (8,9) for clamping and retaining the support rod on which is articulated the sun vizor, said mechanical means having hook-on wings (3) symmetrical between each other and provided with retaining pawls (5) and guiding projections (6) which co-operate therewith. Application to the industry of motor vehicles.

## Technical Field of the Invention

The present invention relates to a hinge for motor vehicle sun visors designed particularly for connecting the sun visor to the support shaft on which it is pivotably mounted.

## Background of the Invention

The constant technological improvements made in sun visors with which motor vehicles are normally equipped bear specially on the performance required of the hinges connecting the sun visor as such to the support shaft on which they are pivotably mounted under normal conditions of use. Such technological improvements involve: in a first case, a notable increase in the mechanical demands on the retaining and holding means of the support shaft, due logically to the increase in weight caused by the inclusion in the sun visor of items providing for a greater level of comfort within the vehicle passenger compartment, such as, for example, vanity mirrors having electric lighting means and mirror concealment means; and, in a second case, a limited structural strength of the sun visors as a result of using extremely light materials, such as polyurethane foam, for the body member of such visors, requiring that the metal frame defining the contour of the sun visor, normally formed by a rod having a closed perimetral contour, should be firmly attached to the visor hinge, such that manipulations by the user under normal conditions of use will not cause inadmissible deformation or damage.

There are known within this field utility model no 276,823 "New hinge for motor vehicle sun visors" and utility model no 275,684 "Reinforced hinge for pivotably mounting motor vehicle sun visors". Utility model no 276,823 teaches an injection moulded plastics body member together with a metal rod forming the sun visor frame and having a spring to retain the support shaft on which said sun visor is pivotably mounted. Utility model no 275,684 teaches a body member also produced from plastics material mechanically attached to the metal rod forming the sun visor frame and which is externally provided with a retaining spring for the support shaft on which the sun visor is pivotably mounted.

These two prior utility models nos 276,823 and 275,684 have, in general, a reduced capacity of adaptation to the wide range of mechanical demands to which the sun visors currently available on the market are subjected, together with a substantially complex manufacture and assembly, with the result of high costs involved therewith.

## Explanation of the Invention

With a view to providing a solution which simultaneously provides an answer to the problems raised, on the one hand, by the high mechanical moments acting on the retaining and holding means for the support shaft on which the sun visor is pivotably mounted, as a result of the latter comprising accessories of varied nature and, on the other hand, conferring adequate mechanical strength to the sun visor when it is formed by light weight materials, there is disclosed a sun visor for motor vehicles which differs substantially from all prior art known to the inventor for its structure, functionality and cheapness.

The hinge for motor vehicle sun visors of the invention is characterised in that it is formed by a one-piece body member produced preferably from plastics materials having mechanical properties appropriate for the contemplated purpose and in which there are formed the mechanical means designed for the firm, irreversible connection of said body member to the metal rod forming the sun visor frame, and a housing designed to receive alternative mechanical means for holding and retaining the support shaft on which the sun visor is pivotably mounted.

The hinge for motor vehicle sun visors of the invention is also characterised in that the mechanical means designed for the firm connection of the one-piece body member with the metal rod forming the sun visor frame comprises symmetrical engagement wings on which there are formed retaining tabs and guide flanges, said retaining tabs and guide flanges working jointly.

The hinge for motor vehicle sun visors of the invention is also characterised in that the housing designed for receiving the alternative mechanical means for holding and retaining the support shaft on which the sun visor is pivotably mounted is sufficiently dimensioned to receive springs having a shape and mechanical properties variable in accordance with each particular case of application.

## Brief Description of the Drawing

The hinge for motor vehicle sun visors of the invention is illustrated in the drawing sheet accompanying the present description and in which:

Figure 1 is a front view of the object of the invention attached to the metal rod forming the sun visor frame.

Figure 2 is a view, partly in section, of the object of the invention in one stage of connection to the said metal rod.

Figure 3 is a cross section view on the line III-III of Figure 1.

Figures 4 and 5 are views, partly in section, of the object of the invention incorporating different springs for holding and retaining the support shaft (not shown in the figures) on which the sun visor is pivotably mounted.

Figure 6 is a cross section view on the line VI-VI of Figure 1.

## Detailed Description of the Embodiment

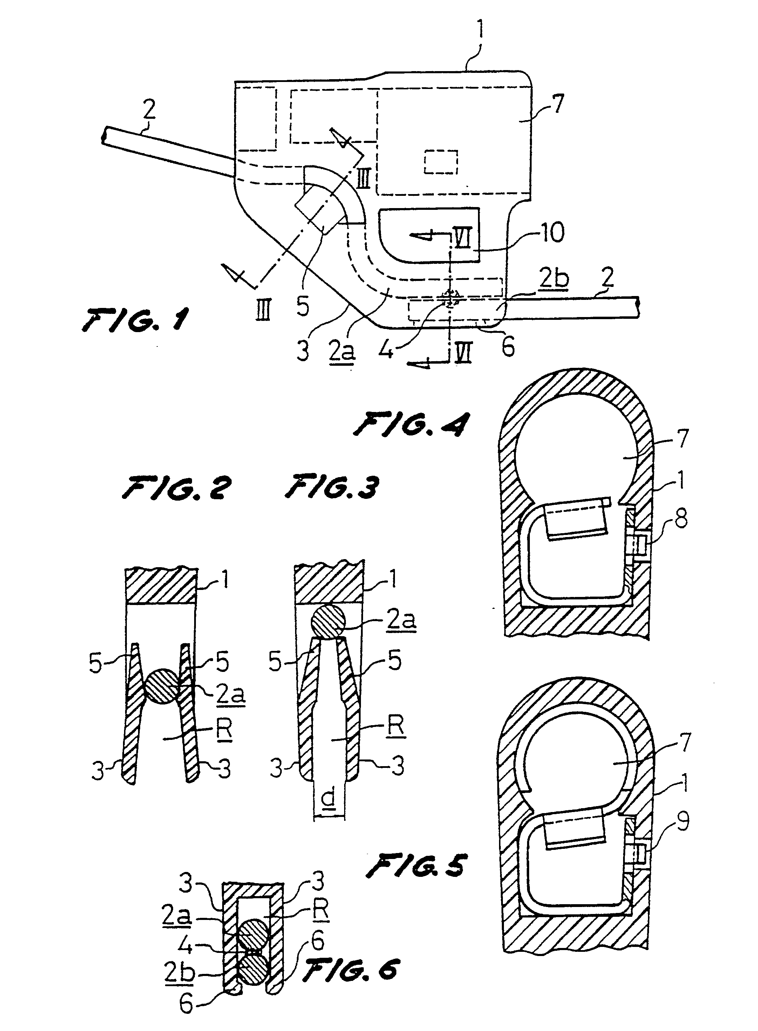

The hinge for motor vehicle sun visors of the invention herein described as one example of embodiment is formed as shown in Figure 1 of the accompanying drawing sheet by a body member 1, preferably made from plastics materials having mechanical properties appropriate for each particular application.

In said body member 1 there are formed the mechanical means designed for the firm connection of this body member to the metal rod 2 having a closed perimetral contour and which forms the sun visor frame, shown in part in Figure 1.

The mechanical means formed in the body member 1 for connecting said body member with the metal rod 2 comprise two engagement wings 3 shown in detail in Figures 1, 2, 3 and 6 of the accompanying drawing sheet.

Said engagement wings 3 are symmetrical and define a slot R wherein the distance d between the inner parallel surfaces of both engagement wings 3 forms a snug fit with the diameter of the metal rod 2 as shown in Figure 6, and the bottom of said slot R is provided with a sinuous contour to which the previoiusly shaped metal rod 2 is adapted, as shown in Figure 1.

In Figure 1 of the embodiment described here it is seen how the free end 2a of the metal rod 2 is snugly adapted along the whole length thereof to the contour defined by the bottom of the slot R and how said free end 2a is welded at 4 to the free end 2b of said metal rod 2, thereby forming a closed contour the perimeter of which in essence mates with and/or adapts itself to the external shape of the sun visor.

On the engagement wings 3 there are formed two retaining tabs 5 and the guide flanges 6, also two in number.

Figure 2 shows the resilient action of the free end 2a of the metal rod 2 on the retaining tabs 5 when it is pressed into the body member 1 through the slot R, while Figure 3 shows how the action of the retaining tabs 5, on returning to their initial position once the free end 2a has been located and coupled in the bottom of the slot R, prevents the separation of the said body member 1 and metal rod 2 in any case.

This connection between the body member 1 and the metal rod 2 is reinforced by the action of the guide flanges 6 on both free ends 2a and 2b of the metal rod 2 which have previously been joined together by the weld 4, as shown in Figure 6 of the accompanying drawing sheet, by way of a process similar to the one just described.

In the body member 1 there is also formed the housing 7 designed for locating the mechanical means for holding and retaining the support shaft (not shown in the accompanying drawing sheet) on which the sun visor is pivotably mounted.

This housing 7 is dimensioned in the embodiment described here to house at least the spring 8 corresponding to utility model 292,644, of the same applicant, as shown in Figure 4 or the spring 9 corresponding to patent P 8900980, also of the same applicant, as shown in Figure 5.

The use of the spring 8 as a holding and retaining means for the support shaft on which the sun visor is pivotably mounted will be made in cases where the mechanical demands on the sun visor in the form of moments acting on the said support shaft are small and, in particular, less than 1.2 Nm, while the use of spring 9 will be required in the cases where said moments are in excess of the aforesaid value of 1.2 Nm.

The practically rectangular aperture 10 formed in the body member 1 and which is shown in Figure 1 of the accompanying drawing sheet is simply a product of the manufacturing process contemplated for said body member 1 and has no operative function whatsoever in connection with the invention.

It will be understood from Figure 1 that once the body member 1 has been firmly and irreversibly attached to the metal rod 2 as has been explained above, the relative position thereof may not be varied in any way since this is prevented by the sinuous shape formed into the free end 2a of the metal rod 2, which snugly fits the contour formed in the bottom of the slot R defined by the engagement wings 3.

## Claims

1. A hinge for motor vehicle sun visors characterised in that it is formed by a one-piece body member (1) in which there are formed the mechanical means designed for the firm, irreversible connection of said body member (1) to the metal rod (2) forming the sun visor frame, and a housing (7) designed to receive alternative mechanical means (8,9) for holding and retaining the support shaft on which the sun visor is pivotably mounted.

2. The hinge for motor vehicle sun visors of claim 1, characterised in that the mechanical means designed for the firm connection of the one-piece body member (1) with the metal rod (2) forming the sun visor frame comprises symmetrical engagement wings (3) on which there are formed retaining tabs (5) and guide flanges (6), said retaining tabs (5) and guide flanges (6) working jointly.

3. The hinge for motor vehicle sun visors of claims 1 and 2, characterised in that the housing (7) designed for receiving the alternative mechanical means for holding and retaining the support shaft on which the sun visor is pivotably mounted is sufficiently dimensioned to receive springs (8 or 9) having a shape and mechanical properties variable in accordance with each particular case of application.

FIG. 1

FIG. 4

FIG. 2    FIG. 3

FIG. 5

FIG. 6

# INTERNATIONAL SEARCH REPORT

## I. CLASSIFICATION OF SUBJECT MATTER (if several classification symbols apply, indicate all) *

According to International Patent Classification (IPC) or to both National Classification and IPC

Int.Cl.$^5$   B60J 3/02

## II. FIELDS SEARCHED

### Minimum Documentation Searched [7]

| Classification System | Classification Symbols |
|---|---|
| Int.Cl.$^5$ | B60J |

### Documentation Searched other than Minimum Documentation to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| X | GB, A, 1452220 (GEBRÜDER HAPPICH GmbH) 13 October 1976   see page 2,lines 60-80; figures 3,4 | 1,3 |
| Y | | 2 |
| Y | FR, A, 2284475 (GEBRÜDER HAPPICH GmbH) 9 April 1976 see page 6,lines 12-17,26-33;page 9,lines 19-25 figures 11-13 | 2 |
| A | EP, A, 0090157 (GEBRÜDER HAPPICH GmbH) 5 October 1983   see claim 1;figures 1-5 | 1,3 |

----------------------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 10 September 1990 (10.09.90) | 26 October 1990 (26.10.90) |

| International Searching Authority | Signature of Authorized Officer |
|---|---|
| EUROPEAN PATENT OFFICE | |

Form PCT/ISA/210 (second sheet) (January 1985)

# ANNEX TO THE INTERNATIONAL SEARCH REPORT
## ON INTERNATIONAL PATENT APPLICATION NO.

ES 9000023
SA      38475

This annex lists the patent family members relating to the patent documents cited in the above-mentioned international search report.
The members are as contained in the European Patent Office EDP file on 23/10/90
The European Patent Office is in no way liable for these particulars which are merely given for the purpose of information.

| Patent document cited in search report | Publication date | Patent family member(s) | Publication date |
|---|---|---|---|
| GB-A- 1452220 | 13-10-76 | FR-A-      2325291 | 15-04-77 |
| FR-A- 2284475 | 09-04-76 | DE-A,B,C 2443307 | 08-04-76 |
| | | GB-A-      1481372 | 27-07-77 |
| | | JP-A,B,C51035926 | 26-03-76 |
| | | SE-B-      428282 | 20-06-83 |
| | | SE-A-      7509837 | 11-03-76 |
| EP-A- 0090157 | 05-10-83 | JP-A,B  58177712 | 18-10-83 |
| | | US-A-      4469367 | 04-09-84 |

EPO FORM P0479

For more details about this annex : see Official Journal of the European Patent Office, No. 12/82